# EUROPÄISCHE PATENTSCHRIFT

(11) **EP 2 138 618 B1**
(45) Veröffentlichungstag und Bekanntmachung des Hinweises auf die Patenterteilung: **14.12.2011**
(21) Anmeldenummer: 09162195.3
(22) Anmeldetag: 08.06.2009
(51) Int. Cl.: D04H 18/00, F16C 33/60

(54) **Nadelmaschine**
Needle machine
Aiguilleteuse

(30) Priorität: 27.06.2008 DE 102008030605
(43) Veröffentlichungstag der Anmeldung: 30.12.2009
(73) Patentinhaber: Oerlikon Textile GmbH & Co. KG, 42897 Remscheid (DE)
(72) Erfinder: Reutter, Tilman, 4201, Eidenberg (AT); Plump, Andreas, 4020, Linz (AT); Mayer, Andreas, 91054, Erlangen (DE); Bu, Daniel, 4052, Ansfelden (AT)
(74) Vertreter: Kahlhöfer, Hermann

(56) Entgegenhaltungen:
- DE-A1- 3 643 278
- GB-A- 1 355 092
- GB-A- 2 276 213
- US-A- 3 639 019
- US-A- 5 873 152

## Beschreibung

Die Erfindung betrifft eine Nadelmaschine zum Vernadeln einer Faserbahn gemäß dem Oberbegriff des Anspruchs 1.

Eine gattungsgemäße Nadelmaschine zum Vernadeln einer Faserbahn ist aus der WO 96/21764 bekannt.

Die bekannte Nadelmaschine weist einen Nadelbalken auf, der an seiner Unterseite eine Mehrzahl von Nadeln hält. Der Nadelbalken ist über einen Balkenträger mit einem Vertikalantrieb verbunden, der den Nadelbalken in einer oszillierenden Auf- und Abwärtsbewegung antreibt. Der Vertikalantrieb weist hiezu eine Getriebekinematik auf, die aus einer Kurbelwelle und mehreren mit der Kurbelwelle verbundenen Pleuelstangen besteht. Jede der Pleuelstangen ist hierzu mit einem Pleuelkopf durch eine Lagereinrichtung an einem Wellenabschnitt der Kurbelwelle drehbar gelagert. Der Wellenabschnitt der Kurbelwelle zur Aufnahme des Pleuelkopfes ist exzentrisch ausgebildet, so dass von dem freien Ende der Pleuelstange eine Auf- und Abwärtsbewegung übertragen wird. Um die hohen Lasten mit möglichst langen Lebensdauern bewegen zu können, weist die Lagereinrichtung eine Mehrzahl von Wälzkörpern auf. Zur Führung der Wälzkörper werden handelsübliche Wälzlager eingesetzt. So ist es beispielsweise bekannt, die Lagereinrichtung durch geteilte Wälzlager oder mit einteiligen Wälzlagern und geteilten Kurbelwellen auszuführen. Derartige Teilungen bedingen jedoch höhere Toleranzen, die sich insbesondere bei der Übertragung der Drehbewegung der Kurbelwelle auf die oszillierende Auf- und Abwärtsbewegung der Pleuelstange negativ auf die Lagerlebensdauer auswirken. Insoweit werden möglichst spielfreie und eng tolerierte Lagereinrichtungen zwischen den Pleuelstangen und der Kurbelwelle gewünscht.

Grundsätzlich ist es jedoch auch bekannt, mehrteilige handelsübliche Wälzlager zu verwenden, bei welchen das Wälzlager auf den betreffenden Wellenabschnitt der Kurbelwelle aufgeschoben wird und bei welchen die Wälzkörper innerhalb des Wälzlagers durch mehrere zusammenwirkende Teile gehalten sind. Derartige Wälzlager haben jedoch auch grundsätzlich den Nachteil, dass jedes der Teile Toleranzen aufweist, die sich in ungünstigen Fällen zur Spielpassung addieren und ein Lockern der Teile bewirken.

Es ist daher Aufgabe der Erfindung, eine Nadelmaschine der gattungsgemäßen Art derart weiterzubilden, dass der Nadelbalken auch bei hohen Geschwindigkeiten und über lange Standzeiten hinweg mit sehr guter Wiederholgenauigkeit der Bewegungsamplituden auf- und abwärtsbewegbar ist.

Diese Aufgabe wird erfindungsgemäß dadurch gelöst, dass die Lagereinrichtung zur äußeren Abstützung der Wälzkörper einen geschlossenen Führungsring mit zwei sich an den Stirnseiten des Führungsringes gegenüberliegenden Stützkrägen aufweist, dass die Stützkrägen eine am Führungsring ausgebildete innere Lauffläche axial begrenzen und dass zumindest eine durch einen Materialbruch erzeugte Trennfuge zwischen einem der Stützkrägen und dem Führungsring ausgebildet ist.

Vorteilhafte Weiterbildungen der Erfindung sind durch die Merkmale und Merkmalskombinationen der Unteransprüche definiert.

Die Erfindung war auch nicht dadurch nahegelegt, dass beispielsweise aus der EP 0 623 194 B1 eine Lagereinrichtung bekannt ist, bei welcher eine Teilung eines äußeren Führungsringes durch einen Materialbruch hergestellt ist. Derartige Bruchtechniken lassen sich auf Grund der erforderlichen Trennkräfte nur bei relativ dünnwandigen und geringen Durchmesserbereichen der Lagerteile anwenden. So ist die bekannte Lagereinrichtung insbesondere zur Kurbelwellenlagerung in einem zweitakt oder viertakt Motor ausgebildet. Des Weiteren ist die aus der EP 0 623 194 B1 bekannte Bruchtechnik eingesetzt, um einen geschlossenen Führungsring in mehrere segmentförmige Teilringe zu durchtrennen. Dadurch lassen sich Trennfugen in einer von den Wälzkörpern kontaktierten Laufbahn nicht vermeiden, die eine Verschleißerhöhung und damit eine Lebensdauerreduzierung mit sich bringen.

Die in Nadelmaschinen eingesetzte Getriebekinematik erfordert Kurbelwellen im Durchmesserbereich von >120 mm, so dass entsprechend große und dickwandige Lagereinrichtungen benötigt werden, bei denen die Herstellung von Bruchflächen nicht naheliegend erscheint.

Die Erfindung löst sich nun von den Vorbehalten und schafft eine Lagereinrichtung für die Getriebekinematik des Vertikalantriebes, die die Anforderungen und Bedingungen einer Nadelmaschine zur gleichmäßigen oszillierenden Bewegung des Nadelbalkens erfüllt. Hierbei lassen sich vorteilhaft axiale Teilungen der Kurbelwelle oder der Lagerteile vermeiden. Die Trennfuge zwischen dem Stützkragen und dem geschlossenen Führungsring ermöglicht einerseits eine einfache Montage und andererseits eine betriebssichere formschlüssige Verbindung zwischen dem Stützkragen und dem Führungsring. Ein Mitdrehen des Stützkragens relativ zum Führungsring ist somit ausgeschlossen. Damit lassen sich auch hohe Drehzahlen über die Lagereinrichtung auf die Pleuelstange übertragen, ohne dass erhöhte Verschleißerscheinungen in der Lagereinrichtung eintreten.

Um die Abstützung und das Abrollen der Wälzkörper an der Lauffläche des Führungsringes ausführen zu können, ist die Weiterbildung der Erfindung bevorzugt verwendet, bei welcher die Trennfuge umlaufend am Umfang des Führungsringes im Übergangsbereich zwischen der Lauffläche und dem Stützkragen ausgebildet ist. Damit bleiben die von den Wälzkörpern kontaktierten Bereiche der Lauffläche an dem Führungsring unbeeinflusst.

Hierbei wird im Betrieb der Formschluss innerhalb der Trennfuge zwischen dem Stützkragen und dem Führungsring durch Halteringe sichergestellt, welche zur axialen Fixierung des Führungsringes mit dem Pleuelkopf verbunden sind.

Um einerseits bei der Herstellung der Trennfuge im Führungsring vorhandene Kerbwirkungen nutzen zu können und andererseits die Trennfuge in einem möglichst dünnwandigen Bereich des Führungsrings auszubilden, ist die Weiterbildung der Erfindung besonders vorteilhaft, bei welcher eine an dem Stützkragen ausgebildete Bruchfläche und eine korrespondierende am Führungsring ausgebildete Bruchfläche in radialer Richtung durch die innere Lauffläche und dem Umfang des Führungsringes begrenzt sind.

Hierbei lässt sich die Kerbwirkung an dem Führungsring noch dadurch verbessern, indem am Umfang des Führungsringes eine umlaufende Trennnute ausgebildet ist, welche im Nutgrund die Trennfuge bildet. Durch die Größe und Tiefe der Trennnute lassen sich unmittelbar auch bei sehr großen Außendurchmessern und entsprechend dickwandigen Führungsringen kurze Trennfugen realisieren.

Auf Grund der relativ großen Masse des Nadelbalkens treten bei höheren Geschwindigkeiten entsprechend hohe dynamische Belastungen auf, die von der Getriebekinematik des Vertikalantriebes aufgefangen werden müssen. Insoweit ist es erforderlich, möglichst Kurbelwellen mit großen Durchmessern einsetzen zu können. Dieses Ziel lässt sich insbesondere durch die Weiterbildung der Erfmdung erreichen, bei welcher die Lagereinrichtung zur Führung der Wälzkörper ein Lagerkäfig aufweist, durch welchem die Wälzkörper in einer Führungsbahn direkt am Umfang des Wellenabschnitts der Kurbelwelle führbar sind. Damit lassen sich die Wälzkörper ohne Zwischenschaltung weitere Lagerteile direkt am Umfang der Kurbelwelle führen.

Zur axialen Fixierung der Wälzkörper ist es hierbei besonders vorteilhaft, wenn die Führungsbahn am Umfang des Wellenabschnitts der Kurbelwelle durch einen Nutgrund einer Wälzkörpernute gebildet ist.

Damit die Wälzkörper gegenüber der Umgebung abgeschirmt sind, um beispielsweise das Austreten eines Schmiermittels zu verhindern, ist gemäß einer weiteren vorteilhaften Weiterbildung der Erfindung zwischen dem Wellenabschnitt der Kurbelwelle und den zu beiden Seiten des Führungsringes angeordneten Halteringen mehrere Dichtspalte gebildet. Die Dichtwirkung derartiger Dichtspalte kann dabei durch Hinzufügen von Dichtungen, die zwischen den Halteringen und dem Wellenabschnitt wirken, unterstützt werden.

Grundsätzlich weist die Kurbelwelle der Getriebekinematik in der Nadelmaschine mehrere Wellenabschnitte auf, die zur Lagerung von Pleuelstangen oder die zur Lagerung der Kurbelwelle in einem Gehäuse ausgebildet sind, wobei zumindest eine der Lagereinrichtungen einen zweiten Führungsring mit gebrochener Trennfuge gegenüber dem Stützkragen aufweist. So lassen sich auch Gehäuselagerstellen mit einem zweiteiligen Führungsring ausbilden.

Die zum Antrieb des Nadelbalkens erforderliche Getriebekinematik basiert darauf, dass die Kurbelwelle und der Wellenabschnitt der Kurbelwelle einen Außendurchmesser von mindestens 120 mm aufweist. In Abhängigkeit von der Hubgröße und der Materialbreite können sogar Kurbelwellen mit einem Außendurchmesser im Bereich von oberhalb 200 mm eingesetzt werden.

Die erfindungsgemäße Nadelmaschine ist nachfolgend anhand eines Ausführungsbeispiels unter Hinweis auf die beigefügten Figuren näher erläutert.

Es stellen dar:
Figur 1 schematisch eine Seitenansicht eines ersten Ausführungsbeispiels der erfindungsgemäßen Vorrichtung,
Figur 2 schematisch eine Querschnittsansicht der Lagereinrichtung zwischen Pleuelkopf und Kurbelwelle gemäß dem Ausführungsbeispiel nach Figur 1 und
Figur 3 schematisch eine Querschnitts- und Teilansicht eines Führungsringes der Lagereinrichtung gemäß dem Ausführungsbeispiel nach Figur 2

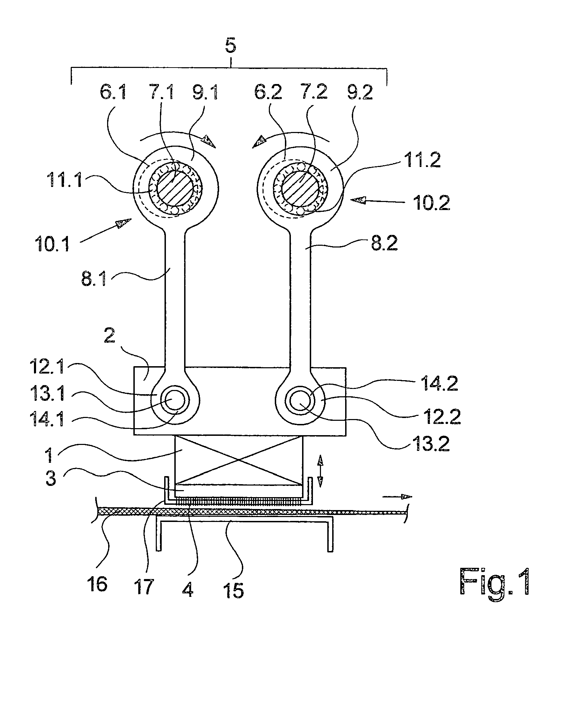

In Figur 1 ist ein erstes Ausführungsbeispiel der erfindungsgemäßen Nadelmaschine zum Vernadeln einer Faserbahn dargestellt. Das Ausführungsbeispiel der erfindungsgemäßen Nadelmaschine weist einen Balkenträger 2 auf, der an seiner Unterseite einen Nadelbalken 1 hält. Der Nadelbalken 1 trägt an seiner Unterseite ein Nadelbrett 3 mit einer Vielzahl von Nadeln 4. Dem Nadelbrett 3 mit den Nadeln 4 sind ein Abstreifer 17 und eine Ablage 15 zugeordnet, zwischen denen eine Faserbahn 16 geführt ist.

An dem Balkenträger 2 greift ein Vertikalantrieb 5 an. Durch den Vertikalantrieb 5 wird der bewegliche Balkenträger 2 in vertikaler Richtung oszillierend bewegt, so dass der Nadelbalken 1 mit dem Nadelbrett 3 eine Auf- und Abwärtsbewegung ausführt. Der Vertikalantrieb 5 weist hierzu zumindest eine Getriebekinematik auf, die über die Länge des Nadelbalkens 1 mit mindestens einem Balkenträger 2 am Nadelbalken 1 angreift. In diesem Ausführungsbeispiel ist die Getriebekinematik durch zwei parallel angeordnete Kurbelwellen 6.1 und 6.2 gebildet, die mit zwei Pleuelstangen 8.1 und 8.2 verbunden sind. Die Pleuelstangen 8.1 und 8.2 weisen jeweils einen Pleuelkopf 9.1 und 9.2 auf, die über eine Lagereinrichtung 10.1 und 10.2 jeweils an einem Wellenabschnitt 7.1 und 7.2 der Kurbelwelle 6.1 1 und 6.2 gehalten sind. Die Wellenabschnitte 7.1 und 7.2 der Kurbelwelle 6.1 und 6.2 sind exzentrisch ausgebildet, so dass bei Drehbewegung der Kurbelwellen 6.1 und 6.2 die Pleuelköpfe 9.1 und 9.2 exzentrisch geführt sind und an den Pleuelstangen 8.1 und 8.2 eine Auf- und Abwärtsbewegung erzeugen.

An dieser Stelle sei ausdrückliche erwähnt, dass die in diesem Ausführungsbeispiel dargestellten Kurbelwellen 6.1 und 6.2 alternativ auch als Exzenterwellen ausgebildet sein könnten.

Die Verbindung zwischen der Kurbelwelle 6.1 und der Pleuelstange 8.1 wird durch die Lagereinrichtung 10.1 gebildet, die eine Mehrzahl von Wälzkörpern 11.1 aufweist. Die Wälzkörper 11.1 sind hierzu zwischen den Wellenabschnitt 7.1 der Kurbelwelle 6.1 und dem Pleuelkopf 9.1 der Pleuelstange 8.1 angeordnet. Dementsprechend wird die Verbindung zwischen der Kurbelwelle 6.2 und der Pleuelstange 8.2 durch die zweite Lagereinrichtung 10.2 und den darin angeordneten Wälzkörpern 11.2 gebildet.

Am unteren Ende sind die Pleuelstangen 8.1 und 8.2 jeweils durch Pleuelaugen 12.1 und 12.2 mit einem am Balkenträger 2 angeordneten Zapfen 13.1 und 13.2 verbunden. Zwischen den Pleuelaugen 12.1 und 12.2 und dem Zapfen 13.1 und 13.2 sind jeweils Lagerringe 14.1 und 14.2 vorgesehen.

Zur Ausführung der Auf- und Abwärtsbewegung des Nadelbalkens 1 werden die Kurbelwellen 6.1 und 6.2 synchron mit entgegen gesetztem Drehsinn angetrieben, so dass der Balkenträger 2 parallel geführt ist.

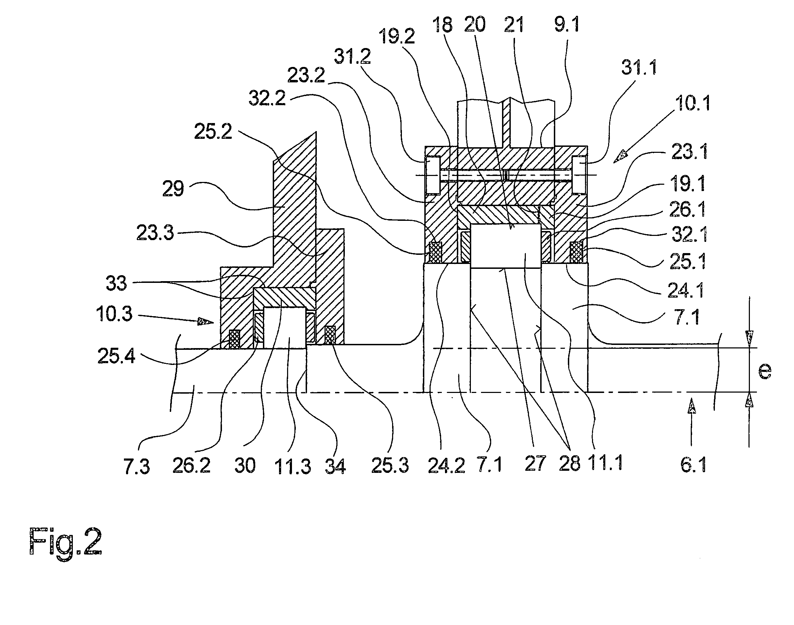

Die oszillierende Auf- und Abwärtsbewegung des Nadelbalkens 1 ist hierbei im Wesentlichen von der Lagerung der Pleuelköpfe 9.1 und 9.2 an den Kurbelwellen 6.1 und 6.2 abhängig. Die Lagereinrichtungen 10.1 und 10.2 sind identisch ausgebildet. Am Beispiel der Lagereinrichtung 10.1 ist der Aufbau nachfolgend näher beschrieben. Hierzu wird gleichzeitig Bezug zu der Figur 2 genommen.

In Figur 2 ist eine Teilansicht einer Querschnittdarstellung der Kurbelwelle 6.1 gezeigt. Die Kurbelwelle 6.1 weist einen exzentrischen Wellenabschnitt 7.1 auf. Die Exzentrizität ist durch den Kleinbuchstaben e gekennzeichnet. Am Umfang des Wellenabschnittes 7.1 ist die Lagereinrichtung 10.1 angeordnet. Die Lagereinrichtung 10.1 weist mehrere am Umfang des Wellenabschnitt 7.1 gleichmäßig verteilte Wälzkörper 11.1 auf. Die Wälzkörper 11.1 sind hierzu in einer umlaufenden Wälzkörpernut 28 des Wellenabschnitts 7.1 geführt. Der Nutgrund der Wälzkörpernut 28 ist als Führungsbahn 27 ausgebildet, an welcher die Wälzkörper 11.1 geführt sind. Die Wälzkörper 11.1 werden hierzu durch einen Lagerkäfig 26.1 am Umfang des Wellenabschnitts 7.1 der Kurbelwelle 6.1 gehalten. Die Wälzkörper 11.1 werden vorzugsweise durch Zylinderrollen gebildet, um die relativ hohen dynamischen Kräfte und Belastungen aufnehmen zu können.

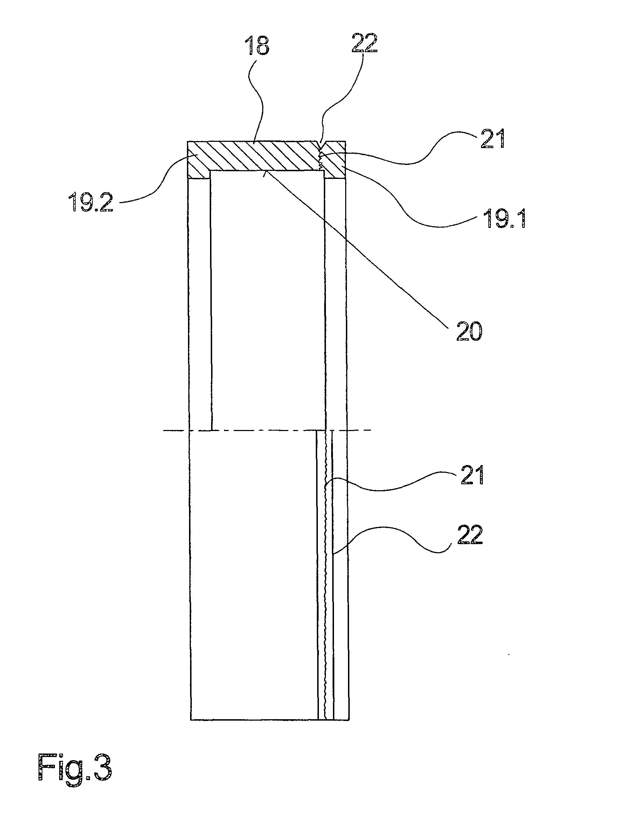

Zur äußeren Abstützung der Wälzkörper 11.1 ist ein geschlossener Führungsring 18 vorgesehen. Um den Aufbau und die Funktion des Führungsringes 18 zu erläutern, wird ebenfalls zu der Darstellung in Figur 3 Bezug genommen. Die Figur 3 zeigt eine Teilansicht und einen Teilquerschnitt des Führungsrings 18.

Der Führungsring 18 weist zu beiden Stirnseiten jeweils einen Stützkragen 19.1 und 19.2 auf. Der Stützkragen 19.1 und der Stützkragen 19.2 begrenzen an der Innenseite des Führungsringes 18 eine Lauffläche 20, an welcher sich die Wälzkörper 11.1 abstützen.

Zwischen dem Führungsring 18 und dem an der rechten Stirnseite angeordneten Stützkragen 19.1 ist eine Trennfuge 21 ausgebildet. Die Trennfuge 21 wird durch Bruchflächen gebildet, die durch einen Materialbruch zwischen dem Führungsring 18 und dem Stützkragen 19.1 erzeugt worden ist. Die Trennfuge 21 ist hierzu in dem Übergansbereich zwischen dem Stützkragen 19.1 und der Lauffläche 20 auf der Innenseite des Führungsringes 18 ausgebildet, um möglichst natürliche Kerbwirkungen innerhalb des Führungsringes 18 für den Materialbruch nutzen zu können. An dem gegenüberliegenden Ende der Trennfuge ist am Umfang des Führungsrings 18 eine Trennnut 22 eingebracht, deren Nutgrund die Trennfuge 21 liegt. Die Trennfuge 21 ist in den Übergangsbereich zum Stützkragen 19.1 gelegt, dass sowohl die Bruchfläche an der Stirnseite des Führungsringes 18 als auch die gegenüberliegende Bruchfläche an der Stirnseite des Stützkragens 19.1 in radialer Richtung durch die Lauffläche 20 und durch den Umfang des Führungsringes 18 begrenzt sind.

Der gegenüberliegende Stützkragen 19.2 auf der gegenüberliegenden Stirnseite des Führungsrings 18 ist fest mit dem Führungsring 18 verbunden und dient bei einer Montage des Führungsrings 18 als Anschlag gegenüber dem Wälzkörpern 11.1.

Wie aus der Darstellung in Figur 2 hervorgeht, wird im Betrieb der Stützkragen 19.1 und der Führungsring 18 durch zwei gegenüberliegende Halteringe 23.1 und 23.2 formschlüssig zusammengehalten. Die Halteringe 23.1 und 23.2 sind durch die Befestigungsmittel 31.1 und 31.2 mit dem Pleuelkopf 9.1 fest verbunden.

Die Halteringe 23.1 und 23.2 bilden gegenüberliegend zu dem Wellenabschnitt 7.1 der Kurbelwelle 6.1 die Dichtspalte 24.1 und 24.2. An den die Dichtspalte 24.1 und 24.2 bildenden Dichtflächen enthalten die Halteringe 23.1 und 23.2 jeweils eine Eindrehung 32.1 und 32.2 auf, in welchem jeweils eine Dichtung 25.1 und 25.2 gehalten ist.

Die in Figur 2 dargestellte Lagereinrichtung 10.1, wie sie in der Getriebekinematik des Ausführungsbeispiels nach Figur 1 eingesetzt ist, lässt sich somit vorteilhaft trotz der Mehrteiligkeit mit enger Toleranz ausbilden. Damit können selbst bei hohen Drehzahlen und Produktionsgeschwindigkeiten lange Betriebslebensdauern erreicht werden. Zudem ist eine einfache Montage der Lagereinrichtung 10.1 am Umfang des Wellenabschnitts 7.1 möglich. Hierzu werden zunächst die in dem Lagerkäfig 26.1 geführten Wälzkörper 11.1 in die Wälzkörpernute 28 des Wellenabschnitts 7.1 eingelegt. Anschließend wird der Pleuelkopf 9.1 mit vormontierten Führungsring 18 ohne den Stützkragen 19.1 seitlich über die Wälzkörper 11.1 geschoben. Anschließend wird der Stützkragen 19.1 mit seiner Bruchfläche passgenau auf die gegenüberliegende Bruchfläche des Führungsrings 18 eingefügt und die dadurch gebildete Trennfuge 21 wird dann durch die Halteringe 23.1 und 23.2 mit dem Führungsring 18 verspannt. Im Betrieb wird der Stützkragen 19.1 durch den Formschluss mit dem Führungsring 18 daran gehindert, eine radiale Relativbewegung auszuführen. Außerdem wird durch den Formschluss ein Mitdrehen des Stützkragens 19.1 verhindert, so dass die Wälzkörper 11.1 innerhalb der Lagereinrichtung 10.1 verschleißarm geführt sind und eine hohe Lebensdauer erreichen. Durch die in den Halteringen 23.1 und 23.2 zugeordneten Dichtungen 25.1 und 25.2 lässt sich die Umgebung der Wälzkörper 11.1 zum Zwecke einer Schmierung abdichten. Als Schmiermittel können hierbei Fettschmierungen oder Ölschmierungen eingesetzt werden.

Bei dem in Figur 1 dargestellten Ausführungsbeispielen der Nadelmaschine sind die parallel angeordneten Kurbelwellen 6.1 und 6.2 an mehreren Stellen in einem hier nicht dargestellten Gehäuse drehbar gelagert. Hierzu sind weitere Lagereinrichtungen erforderlich, die über jeweils einer Mehrzahl von Wälzkörpern verfügen, die zwischen einer Gehäusewand und einem Wellenabschnitt der Kurbelwelle angeordnet sind. Ein möglicher Aufbau einer derartigen Lagereinrichtung zur Lagerung der Kurbelwelle in einer Gehäusewand ist Beispielhaft in der Querschnittsansicht der Kurbelwelle 6.1 in Figur 2 dargestellt.

In dem Ausführungsbeispiel nach Figur 2 weist die Kurbelwelle 6.1 einen exzentrischen Wellenabschnitt 7.3 auf, der mit dem exzentrischen Wellenabschnitt 7.1 verbunden ist. An dem Wellenabschnitt 7.3 ist eine weitere Lagereinrichtung 10.3 ausgebildet. Die Lagereinrichtung 10.3 ist zwischen einer Gehäusewand 29 und dem Wellenabschnitt 7.3 der Kurbelwelle 6.1 angeordnet. Die Gehäusewand 29 bildet eine Ausnehmung 33 in welcher ein Führungsring 30 eingelassen ist. Der Führungsring 30 umschließt eine Mehrzahl von Wälzkörpern 11.3, die am Umfang des Wellenabschnitts 7.3 angeordnet sind. Der Wellenabschnitt 7.3 hat zur Führung der Wälzkörper 11.3 eine Durchmesserstufe 34, die als stirnseitige Führungskante zu den Wälzkörpern 11.3 ausgebildet ist. Die Wälzkörper 11.3 stützt sich direkt am Umfang des Wellenabschnitts 7.3 ab und werden durch einen Lagerkäfig 26.2 geführt.

Zur Axialfixierung des Führungsrings 30 ist ein Haltering 23.3 vorgesehen, der mit der Gehäusewand 29 fest verbunden ist. Der Haltering 23.3 erstreckt sich in radialer Richtung bis kurz vor der Kurbelwelle 6.1 und bildet gegenüber der Kurbelwelle 6.1 einen Dichtspalt, in welchem eine Dichtung 25.3 angeordnet ist.

Auf der gegenüberliegenden Seite zum Haltering 23.3 ist zwischen der Gehäusewand 29 und der Kurbelwelle 6.1 eine weitere Dichtung 25.4 vorgesehen, um den Dichtspalt zwischen der Gehäusewand 29 und der Kurbelwelle 6.1 abzudichten.

Bei der in Figur 2 dargestellten Lagereinrichtung 10.3 zur Lagerung der Kurbelwelle 6.1 in der Gehäusewand 29 weist der Führungsring 30 zu beiden Stirnseiten jeweils einen Stützkragen zur Führung der Wälzkörper 11.3 auf. Hierbei sind die Stützkrägen mit dem Führungsring 30 fest verbunden. Grundsätzlich besteht jedoch auch die Möglichkeit, auf der im Haltering zugewandten Seite einen lösbaren Stützkragen im Führungsring 30 auszubilden. Insoweit könnte der Führungsring 30 entsprechend dem in Figur 3 dargestellten Ausführungsbeispiel des Führungsrings ausgeführt sein. Damit ergeben sich zusätzliche Montagefreiheiten, um die Lagereinrichtungen zwischen der Kurbelwelle und der Gehäusewand zu montieren.

### Bezugszeichenliste

- 1.: Nadelbalken
- 2.: Balkenträger
- 3.: Nadelbrett
- 4.: Nadel
- 5.: Vertikalantrieb
- 6.1, 6.2: Kurbelwelle
- 7.1, 7.2, 7.3: Wellenabschnitt
- 8.1, 8.2: Pleuelstange
- 9.1,9.2: Pleuelkopf
- 10.1, 10.2, 10.3: Lagereinrichtung
- 11.1, 11.2, 11.3: Wälzkörper
- 12.1, 12.2: Pleuelauge
- 13.1, 13.2: Zapfen
- 14.1, 14.2: Lagerring
- 15: Ablage
- 16.: Faserbahn
- 17.: Abstreifer
- 18.: Führungsring
- 19.1, 19.2: Stützkragen
- 20.: Lauffläche
- 21.: Trennfuge
- 22.: Trennnut
- 23.1, 23.2, 23.3: Haltering
- 24.1,24.2: Dichtspalt
- 25.1, 25.2, 25.3, 25.4: Dichtung
- 26.1, 26.2: Lagerkäfig
- 27.: Führungsbahn
- 28.: Wälzkörpernut
- 29.: Gehäusewand
- 30.: Einteiliger Führungsring
- 31.1, 31.2: Befestigungsmittel
- 32.1, 32.2: Eindrehung
- 33.: Ausnehmung
- 34.: Durchmesserstufe

## Patentansprüche

1. Nadelmaschine mit zumindest einem Nadelbalken (1), welcher an einer Unterseite eine Vielzahl von Nadeln (4) trägt, und mit einem Vertikalantrieb (5), der mit dem Nadelbalken (1) zur Ausführung einer Auf- und Abwärtsbewegung verbunden ist, wobei der Vertikalantrieb (5) eine Getriebekinematik (6.1, 6.2, 8.1, 8.2) mit zumindest einer Kurbelwelle (6.1) und einer Pleuelstange (8.1) aufweist, wobei die Pleuelstange (8.1) mit einem Pleuelkopf(9.1) an einem exzentrischen Wellenabschnitt (7.1) der Kurbelwelle (6.1) drehbar gelagert ist und wobei am Umfang des Wellenabschnitts (7.1) der Kurbelwelle (6.1) eine Lagereinrichtung (10.1) mit einer Mehrzahl von Wälzkörpern (11.1) angeordnet ist,
**dadurch gekennzeichnet, dass**
die Lagereinrichtung (10.1) zur äußeren Abstützung der Wälzkörper (11.1) einen geschlossen Führungsring (18) mit zwei sich an den Stirnseiten des Führungsringes (18) gegenüberliegenden Stützkrägen (19.1, 19.2) aufweist, dass die Stützkrägen (19.1, 19.2) eine am Führungsring (18) ausgebildete innere Lauffläche (20) axial begrenzen und dass zumindest eine durch einen Materialbruch erzeugte Trennfuge (21) zwischen einem der Stützkrägen (19.1, 19.2) und dem Führungsring (18) ausgebildet ist.

2. Nadelmaschine nach Anspruch 1,
**dadurch gekennzeichnet, dass**
die Trennfuge (21) umlaufend am Umfang des Führungsringes (18) im Übergangsbereich zwischen der Lauffläche (20) und dem Stützkragen (19.1) ausgebildet ist.

3. Nadelmaschine nach Anspruch 2,
**dadurch gekennzeichnet, dass**
jedem der Stützkrägen (19.1, 19.2) ein Haltering (23.1, 23.2) zugeordnet ist, welche zur axialen Fixierung des Führungsringes (18) mit dem Pleuelkopf (9.1) verbunden sind.

4. Nadelmaschine nach Anspruch 2 oder 3,
**dadurch gekennzeichnet, dass**
eine an dem Stützkragen (19.1) ausgebildete Bruchfläche und eine korrespondierende am Führungsring (18) ausgebildete Bruchfläche in radialer Richtung durch die umlaufende Lauffläche und den Umfang des Führungsrings (18) begrenzt sind.

5. Nadelmaschine nach Anspruch 4,
**dadurch gekennzeichnet, dass**
am Umfang des Führungsringes (18) eine umlaufende Trennnut (21) ausgebildet ist, welche im Nutgrund die Trennfuge (20) bildet.

6. Nadelmaschine nach einem der Ansprüche 1 bis 5,
**dadurch gekennzeichnet, dass**
die Lagereinrichtung (10.1) zur Führung der Wälzkörper (11.1) einen Lagerkäfig (26.1) aufweist, durch welchen die Wälzkörper (11.1) in einer Führungsbahn (27) direkt am Umfang des Wellenabschnitts (7.1) der Kurbelwelle (6.1) führbar sind.

7. Nadelmaschine nach Anspruch 6,
**dadurch gekennzeichnet, dass**
die Führungsbahn (27) am Umfang des Wellenabschnitts (7.1) der Kurbelwelle (6.1) durch einen Nutgrund einer Wälzkörpernut (28) gebildet ist.

8. Nadelmaschine nach einem der Ansprüche 3 bis 7,
**dadurch gekennzeichnet, dass**
zwischen dem Wellenabschnitt (7.1) der Kurbelwelle (6.1) und den zu beiden Seiten des Führungsringes (18) angeordneten Halteringen (23.1) mehrere Dichtspalte (24.1, 24.2) gebildet sind.

9. Nadelmaschine nach Anspruch 7,
**dadurch gekennzeichnet, dass**
jedem der Halteringe (23.1, 23.2) eine Dichtung (25.1, 25.2) zugeordnet ist, welche sich in dem jeweiligen Dichtspalt (23.1, 23.2) an dem Umfang des Wellenabschnitts (7.1) abstützen.

10. Nadelmaschine nach einem der Ansprüche 1 bis 9,
**dadurch gekennzeichnet, dass**
der Kurbelwelle (6.1) in mehreren Wellenabschnitten (7.1, 7.3) durch separate Lagereinrichtungen (10.1, 10.3) gelagert ist, wobei zumindest eine der Lagereinrichtungen (10.3) einen zweiten Führungsring (30) mit oder ohne gebrochener Trennfuge (21) gegenüber dem Stützkragen (19.1) aufweist.

11. Nadelmaschine nach einem der vorgenannten Ansprüche,
**dadurch gekennzeichnet, dass**
die Kurbelwelle (6.1) und der Wellenabschnitt (7.1) der Kurbelwelle (6.1) einen Außendurchmesser im Bereich größer 120mm aufweisen.

## Claims

1. Needle machine having at least one needle bar (1) which carries a multiplicity of needles (4) on its underside, and having a vertical drive (5) which is connected to the needle bar (1) in order to execute ain upward and downward movement, wherein the vertical drive (5) has mechanism kinematics (6.1, 6.2, 8.1, 8.2) having at least one crankshaft (6.1) and a connecting rod (8-1), wherein the connecting rod (8.1) is mounted in a rotatable manner by way of a connecting-rod head (9.1) to an eccentric shaft portion (7.1) of the crankshaft (6.1) and wherein a bearing device (10.1) having a plurality of rolling bodies (11.1) is arranged on the circumference of the shaft portion (7.1) of the crankshaft (6.1),
**characterized in that**,
in order to externally support the rolling bodies (11.1), the bearing device (10.1) has a closed guide ring (18) having two opposite supporting collars (19-1, 19.2) on the end sides of the guide ring (18), **in that** the supporting collars (19.1, 19.2) axially bound an inner running surface (20) formed on the guide ring (18), and **in that** at least one separating joint (21) produced by a maternal fracture is formed between one of the supporting collars (19.1, 19.2) and the guide ring (18).

2. Needle machine according to Claim 1,
**characterized in that**
the separating joint (21) is formed circumferentially at the circumference of the guide ring (18) in the transition region between the running surface (20) and the supporting collar (19.1).

3. Needle machine according to Claim 2,
**characterized in that**
each of the supporting collars (19.1, 19.2) is assigned a retaining ring (23.1, 23.2) which is connected to the connecting-rod head (9.1) in order to axially fix the guide ring (18).

4. Needle machine according to Claim 2 or 3,
**characterized in that**
fracture surface formed on the supporting cellar (19.1) and a corresponding fracture surface formed on the guide ring (18) are bounded in the radial direction by the circumferential running surface and the circumference of the guide ring (18).

5. Needle machine according to Claim 4,
**characterized in that**
a circumferential separating groove (21) is formed at the circumference of the guide ring (18) and forms the separating joint (20) in the groove base.

6. Needle machine according to one of Claims 1 to 5,
**characterized in that**,
in order to guide the rolling bodies (11.1), the bearing device (10.1) has a bearing cage (26.1), through which the rolling bodies (11.1) can be guided in a guide track (27) directly at the circumference of the shaft portion (7.1) of the crankshaft (6.1).

7. Needle machine according to Claim 6,
**characterized in that**
the guide track (27) is formed at the circumference of the shaft portion (7.1) of the crankshaft (6.1) by a groove base of a rolling-body groove (28).

8. Needle machine according to one of Claims 3 to 7,
**characterized in that**
a plurality of sealing gaps (24.1, 24.2) are formed between the shaft portion (7.1) of the crankshaft (6.1) and the retaining rings (23.1) arranged on both sides of the guide ring (18).

9. Needle machine according to Claim 7,
**characterized in that**
each of the retaining rings (23.1, 23.2) is assigned a seal (25.1, 25.2), said seals (25.1, 25.2) being supported in the respective sealing gap (23.1, 23.2) at the circumference of the shaft portion (7.1).

10. Needle machine according to one of Claims 1 to 9,
**characterized in that**
the crankshaft (6.1) is mounted in a plurality of shaft portions (7.1, 7.3) by separate bearing devices (10.1, 10.3), wherein at least one of the bearing devices (10.3) has a second guide ring (30) with or without a fractured separating joint (21) towards the supporting collar (19.1).

11. Needle machine according to one of the preceding claims,
**characterized in that**
the crankshaft (6.1) and the shaft portion (7.1) of the crankshaft (6.1) have an outside diameter in the region of greater than 120 mm.

## Revendications

1. Aiguilleteuse comprenant au moins une barre d'aiguilles (1) qui porte sur un côté inférieur une pluralité d'aiguilles (4) et un entraînement vertical du qui est connecté à la barre d'aiguilles (1) pour effectuer un mouvement montant et descendant, l'entraînement vertical (5) présentant une cinématique de transmission (6.1, 6.2, 8.1, 8.2) avec au moins un vilebrequin (6.1) et une tige de bielle (8.1), la tige de bielle (8.1) étant montée à rotation avec un pied de bielle (9.1) sur une portion d'arbre excentrique (7.1) du vilebrequin (6.1), et un dispositif de palier (10.1) étant disposé avec une pluralité de corps de roulement (11.1) à la périphérie de la portion d'arbre (7.1) du vilebrequin (6.1), **caractérisée en ce que**
le dispositif de palier (10.1) présente, pour le support extérieur des corps de roulement (11.1), une bague de guidage fermée (18) avec deux bords d'appui (19.1, 19.2) opposés au niveau des côtés frontaux de la bague de guidage (18), **en ce que** les bords d'appui (19.1, 19.2) délimitent axialement une surface de roulement interne (20) réalisée sur la bague de guidage (18) et **en ce qu'**au moins un joint de séparation (21) produit par une rupture de matière est réalisé entre l'un des bords d'appui (19.1, 19.2) et la bague de guidage (18).

2. Aiguilleteuse selon la revendication 1,
**caractérisée en ce que**
le joint de séparation (21) est réalisé de manière périphérique sur la périphérie de la bague de guidage (18) dans la région de transition entre la surface de roulement (20) et le bord d'appui (19.1).

3. Aiguilleteuse selon la revendication 2,
**caractérisée en ce que**
l'on associe à chacun des bords d'appui (19.1, 19.2) une bague de retenue (23.1, 23.2), lesquelles sont connectées au pied de bielle (9.1) en vue de la fixation axiale de la bague de guidage (18).

4. Aiguilleteuse selon la revendication 2 ou 3,
**caractérisée en ce**
**qu'**une surface de rupture réalisée sur le bord d'appui (19.1) et une surface de rupture correspondante réalisée sur la bague de guidage (18) sont limitées dans la direction radiale par la surface de roulement périphérique et la périphérie de la bague de guidage (18).

5. Aiguilleteuse selon la revendication 4,
**caractérisée en ce**
**qu'**une rainure de séparation périphérique (21) est réalisée sur la périphérie de la bague de guidage (18), laquelle forme dans le fond de rainure le joint de séparation (21).

6. Aiguilleteuse selon l'une quelconque des revendications 1 à 5,
**caractérisée en ce que**
le dispositif de palier (10.1) pour le guidage des corps de roulement (11.1) présente une cage de palier (26.1) à travers laquelle les corps de roulement (11.1) peuvent être guidés dans une trajectoire de guidage (27) directement sur la périphérie de la portion d'arbre (7.1) du vilebrequin (6.1).

7. Aiguilleteuse selon la revendication 6,
**caractérisée en ce que**
la trajectoire de guidage (27) sur la périphérie de la portion d'arbre (7.1) du vilebrequin (6.1) est formée par une base de rainure de la rainure des corps de roulement (28).

8. Aiguilleteuse selon l'une quelconque des revendications 3 à 7,
**caractérisée en ce**
**qu'**entre la portion d'arbre (7.1) du vilebrequin (6.1) et les bagues de retenue (23.1) disposées des deux côtés de la bague de guidage (18) sont formées plusieurs fentes d'étanchéité (24.1, 24.2).

9. Aiguilleteuse selon la revendication 7,
**caractérisée en ce que**
l'on associe à chacune des bagues de retenue (23.1, 23.2) une garniture d'étanchéité (25.1, 25.2), lesquelles s'appuient dans la fente d'étanchéité respective (23.1, 23.2) sur la périphérie de la portion d'arbre (7.1).

10. Aiguilleteuse selon l'une quelconque des revendications 1 à 9,
**caractérisée en ce que**
le vilebrequin (6.1) est supporté dans plusieurs portions d'arbre (7.1, 7.3) par des dispositifs de palier séparés (10.1, 10.3), au moins l'un des dispositifs de palier (10.3) présentant une deuxième bague de guidage (30) avec ou sans joint de séparation interrompu (21) par rapport au bord d'appui (19.1).

11. Aiguilleteuse selon l'une quelconque des revendications précédentes,
**caractérisée en ce que**
le vilebrequin (6.1) et la portion d'arbre (7.1) du vilebrequin (6.1) présentent un diamètre extérieur dans une plage supérieure à 120 mm.
